(19) Europäisches Patentamt
European Patent Office
Office européen des brevets

(11) **EP 1 775 869 A1**

(12) **EUROPEAN PATENT APPLICATION**

(43) Date of publication:
**18.04.2007 Bulletin 2007/16**

(51) Int Cl.:
*H04L 1/00* (2006.01)     *H04B 1/00* (2006.01)

(21) Application number: **05022599.4**

(22) Date of filing: **17.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **NTT DoCoMo, Inc.
Tokyo (JP)**

(72) Inventors:
- **Kusume, Katsutoshi
  80687 München (DE)**
- **Bauch, Gerhard
  80799 München (DE)**

(74) Representative: **Schoppe, Fritz et al
Schoppe, Zimmermann, Stöckeler & Zinkler
Patentanwälte
Postfach 246
82043 Pullach bei München (DE)**

(54) **Receiver and method with reduced complexity for IDMA (interleave division multiple access)**

(57)     A receiver for iteratively processing information interleaved in a user-specific manner is described, said receiver comprising an iterative multi-user detection circuit having a multi-user detector (130) and a plurality of user-specific iterative processing circuits (131), wherein each user-specific iterative processing circuit (131) is associated with a specific user and comprises a decoder (133, 322), a user-specific deinterleaver (134) in a forward signal path (136) from the multi-user detector (130) to the decoder (133, 322), a user-specific interleaver (114) in a backward signal path (138) from the decoder (133, 322) to the multi-user detector (130), a first node (140) receiving an a posteriori log-likelihood signal of the multi-user detector (130) and an output signal of the interleaver (114) and a second node (142) receiving an output signal of the deinterleaver (134) and an a priori log-likelihood signal from the decoder (133, 322); wherein at least one of the decoders (133, 322) comprises a repetition decoder (216) in the forward signal path (136) directly connected to a repetition encoder (218) in the backward signal path (138)

Fig. 2

**Description**

The present invention relates to the field of wireless multiple access schemes, for example, interleave division multiple access (IDMA).

A high spectral efficiency is expected for future wireless communication systems. Code division multiple access (CDMA) is one of the strong candidates to achieve the high spectral efficiency along with high power efficiency, especially for the uplink of cellular systems. In order to obtain the potential benefits from CDMA, iterative multi-user detection techniques based on the turbo principle have been intensively studied during the last years. An iterative multi-user detection technique comprises a multi-user detector (MUD) and a bank of user-independent decoders. Both the multi-user detector and the decoder are a soft-in soft-out (SISO) block where soft information is exchanged between each other over several iterations to mitigate multiple access interference (MAI).

IDMA has a close relation to CDMA, but instead of using user-distinct or user-specific spreading codes, a bandwidth expansion is fully exploited for coding resulting in a very low rate code, and users are separated only by user-distinct or user-specific multiple interleavers as described by L. Ping, L. Liu, K. Y. Wu, and W. K. Leung, in "Interleave-division multiple-access," submitted to IEEE Transaction on Wireless Communications, in the following [1], and by H. Schoeneich and P. A. Hoeher, "Adaptive interleave-division multiple access - a potential air interface for 4G bearer services and wireless LANs," in Proc. 1st IEEE and IFIP Int. Conf. on Wireless and Optical Communications and Networks (WOCN '2004), June 2004, pp. 179-182, in the following [2]. The performance of IDMA is better than or as good as that of CDMA in various scenarios such as user-asynchronism, multipath channels, near-far effects, and highly user-loaded scenarios, as reported by K. Kusume and G. Bauch in "CDMA and IDMA: Iterative multiuser detections for near-far asynchronous communications," in Proc. IEEE Int. Symposium on Personal, Indoor and Mobile Radio Communications (PIMRC 2005), September 2005, in the following [3].

The advantage of IDMA is its reasonably low complexity of the multi user detector which can be much simpler than the state-of-the-art multi user detector technique for CDMA, e.g. the one proposed by X. Wang and H. V. Poor in "Iterative (Turbo) soft interference cancellation and decoding for coded CDMA," IEEE Transactions on Communications, vol. 47, no. 7, pp. 1046-1061, July 1999, in the following [4]. This reduction of complexity leads to a higher number of users which can be supported by a system, for instance, in the uplink of cellular systems. The complexity of IDMA, however, may be still high for some receivers.

At the receiver, the aforementioned multi-user detector and a bank of user-independent decoders cooperatively mitigate multiple access interference. The code is typically realised by a combination of a convolutional code followed by a repetition code to achieve a variety of rates, thus to flexibly support various numbers of users. The decoding of the code is complex, or in other words, computing-intensive, thus causing considerable costs for deployment, for example, in base stations which serve a large number of users, or in ad hoc network scenarios, where small, portable devices with limited processing power might serve as uplink or "base station".

Li Ping et al: "On Interleave-Division Multiple-Access" describe a transmitter and iterative receiver structures of an IDMA scheme with K simultaneous users. At the transmitter input data sequences are encoded based on a low-rate forward error correction code C and the coded sequence is then interleaved by a chip-level interleaver $\Pi_k$. The receiver structure consists of an elementary signal estimator (ESE) and K single-user a posteriori probability (APP) decoders (DECs). The ESE and DECs operate in a turbo-type iterative manner. For each user the outputs of the elementary signal estimator are deinterleaved by a deinterleave $\Pi_k^{-1}$, decoded by the decoder (DEC), wherein the decoder provides a feedback to the elementary signal estimator, which is interleaved by an interleave $\Pi_k$. The main operations involved in the chip-by-chip (CBC) algorithm described in document D1 are based on the extrinsic log-likelihood ratios (LLRs) generated in the extrinsic signal estimator and the decoder. The encoding at the transmitter is based on a convolutional code followed by a repetition code.

Li Ping et al: "Analysis and Design of IDMA Systems Based on SNR Evolution and Power Allocation" describe a transmitter and part of a receiver related to user k. The transmitter consists of an encoder ENCk and an interleaver $\Pi_k$. The receiver consists of an elementary signal estimator (ESE) and K a posteriori probability (APP) decoders (DECs) operating iteratively. The processing is based on extrinsic log-likelihood ratios (LLRs). They analyze two scenarios: "an uncoded IDMA" scenario and a "coded IDMA" scenario. For the uncoded IDMA scenario only repetition coding is performed for the coded IDMA scenario, the repetition code is exchanged into a concatenation of a convolutional code followed by a repetition code.

It is the object of the present invention to provide a receiver or a method for receiving with reduced complexity, thus, affording less processing power for receiving.

This object is achieved by a receiver according to claim 1, by a method for receiving according to claim 6 and by a computer program according to claim 8.

The present invention provides a receiver for iteratively processing information interleaved in a user-specific manner, said receiver comprising an iterative multi-user detection circuit having a multi-user detector and a plurality of user-specific iterative processing circuits, wherein each user-specific iterative processing circuit is associated with a specific user and comprises a decoder, a user-specific deinterleaver in a forward signal path from the multi-user detector to the decoder, a user-specific interleaver in a backward signal path from the decoder to the multi-user detector, a first node receiving an a posteriori log-likelihood signal of the multi-user detector and an output signal of the interleaver and a second node receiving an output signal of the deinterleaver and an a priori log-likelihood signal from the decoder; wherein at least one of the decoders comprises a repetition decoder in the forward signal path directly connected to a repetition encoder in the backward signal path.

Furthermore, the present invention provides a method of iteratively processing information interleaved in a user-specific manner, said method comprising a multi-user detection and, for each user, a user-specific iterative processing performing for each user a user-specific deinterleaving in a forward signal processing, a decoding and a user-specific interleaving in a backward signal processing; wherein said decoding comprises a repetition encoding subsequent to a repetition decoding.

Furthermore, the present invention provides a computer program having a program code for performing the inventive method, when the program runs on a computer.

The present invention is based on the finding that the code is typically realised by a combination of a convolutional coding followed by a simple repetition coding, that the complexity of the decoding at a receiver is mainly caused by the complexity of the convolutional decoding, and that the complexity of the overall iterative multi-user detection can be significantly reduced by performing the computing-intensive convolutional decoding, for example not for all users or not at every iteration step. With this approach, as will be shown in the following, sufficient user detection and bit error rate performance can still be achieved.

Considering ad hoc wireless connections, traditionally, medium access control (MAC) protocols see the physical layer as a collision model, as described in IEEE Std 802.11-1997, "Part 11: Wireless LAN medium access control (MAC) and physical layer (PHY) specifications," June 1997, in the following [5], while in "Signal processing in random access," by L. Tong, V. Naware, and P. Venkitasubramaniam, IEEE Signal Processing Magazine, vol. 21, no. 5, pp. 29-39, September 2004 in the following [6], the potential of multi-user detection techniques in such a network are discussed. If IDMA is used in decentralised systems like ad hoc networks, not all receivers will probably afford the full complexity of multi-user detection. Furthermore, not all signals, which are simultaneously transmitted, are necessary to be detected. Then, in addition to the desired signals, only a few strong interferers may be important to be detected, so as to extract the desired signals. In such scenarios, the invention can be useful since the complexity can be greatly reduced while achieving graceful performance degradation.

A preferred embodiment of the inventive receiver is implemented such that the at least one of the decoders comprises a switching means for selectively connecting a convolutional decoder between the repetition decoder and the repetition encoder. Thus, the convolutional decoding can be flexibly added, e.g. per user, in cases or scenarios where a certain bit error rate performance or quality of service only with repetition decoding cannot be achieved. On the other hand, the overall processing power for the multi-user detection can be reduced in cases, where, for example, only convolutional decoding of the user of interest's signals and simple repetition decoding of signals of the remaining users is sufficient to achieve a desired bit error rate performance or quality of service.

Another preferred embodiment of the inventive receiver is implemented such that the switching means are arranged for connecting the respective repetition decoders directly to the respective repetition encoders of all user-specific iteration processing circuits during initial iteration processing steps and for connecting the convolutional decoder between the repetition decoder and the repetition encoder only, for example, after a predefined number of iteration processing steps for a final optimisation by one or a plurality of final iteration processing steps. The aforementioned final iteration processing step including the convolutional decoding may be limited to the user of interest, may be applied to a selected number of users or may be performed for all users. Thus again, the required computing effort for the iterative multi-user detection can be reduced by still obtaining sufficient results.

The invention can be used especially in uplinks of cellular systems and decentralised systems like ad hoc networks, where multiple users are accessing common frequency resources simultaneously.

It is well-known that the interleaver size is an important system parameter for iterative processing schemes like IDMA. The interleaver size must be sufficiently large for the iterative processing to be effective over many iterations while it is always limited in practical systems. It will be shown that the invention is also effective in such scenarios.

Preferred embodiments of the present invention are described in detail with respect to the following figures:

Fig. 1A    shows an exemplary code division multiple access (CDMA) transmitter;

Fig. 1B    shows an exemplary interleave division multiple access (IDMA) transmitter;

Fig. 1C    shows an exemplary receiver for CDMA or IDMA;

Fig. 2    shows a diagram of a preferred embodiment of an inventive receiver;

Fig. 3A    shows a diagram of another preferred embodiment of the inventive receiver, wherein the convolutional decoding is only performed for signals of the user of interest and/or for strong interferers;

Fig. 3B    shows a simulation scenario for four equal power users;

Fig. 3C    shows a bit error rate performance for user one according to the scenario shown in Fig. 3B, with convolutional decoding for users one and two only;

Fig. 3D    shows a bit error rate performance for user one according to the scenario shown in Fig. 3B, with convolutional decoding for user one only;

Fig. 4A    shows a simulation scenario for a near-far-scenario of four users, wherein user one is the user of interest and users three and four are strong users;

Fig. 4B    shows a bit error rate performance for user one, wherein the convolutional decoding has been performed only for the strong users three and four according to the scenario shown in Fig. 4A;

Fig. 4C    shows a bit error rate performance for user one, wherein the convolutional decoding has been performed only for strong user three according to the scenario shown in Fig. 4A;

Fig. 5A    shows another preferred embodiment of the inventive receiver, wherein the convolutional decoding is only performed at the final iteration steps;

Fig. 5B    shows a bit error rate performance for user one with eight equal power-users, wherein the convolutional decoding is performed for all users starting from the first iteration;

Fig. 5C    shows a bit error rate performance for user one with eight equal power-users, wherein the convolutional decoding is performed for all users after four initial iterations;

Fig. 6    shows an extrinsic information transfer (EXIT) chart for a frame size $N_b$ = 4.096 bits;

Fig. 7    shows an extrinsic information transfer (EXIT) chart for a frame size of $N_b$ = 1.024 bits;

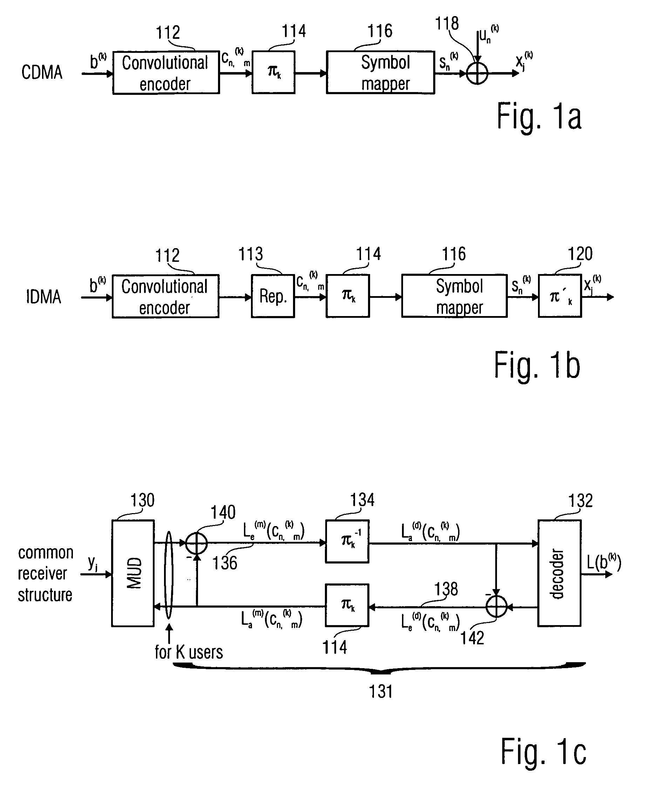

Typical CDMA and IDMA system models are explained in the following based on Figs. 1A to 1C. Fig. 1A shows an exemplary CDMA transmitter comprising a convolutional encoder 112, a user-distinct or user-specific interleaver $\Pi_k$ 114, a symbol mapper 116 and a code spreader 118. At the transmitter the information bits $b^{(k)}$ of user k, k = 1, ..., K, are encoded by the convolutional encoder 112 by the rate $R_c$. The coded bits $c_{n,m}^{(k)}$ output by the convolutional encoder 112 are then interleaved by the user-specific interleaver $\Pi_k$ 114, then mapped to the complex symbols $S_n^{(k)}$ which are elements of a QAM/PSK signal space constellation S by the symbol mapper 116 and spread by spreading code $u_n^{(k)}$ at code spreader 118. The signals $x_j^{(k)}$ from K users are transmitted to a channel.

Fig. 1B shows an exemplary IDMA transmitter comprising a convolutional encoder 112, a repetition encoder 113, the user-specific interleaver $\Pi_k$ 114, the symbol mapper 116 and an optional, second user-specific interleaver $\Pi'_k$ 120. At the IDMA transmitter, the information bits $b_k^{(k)}$ of user k, k = 1, ..., K are encoded by the convolutional encoder 112 at the rate $R_c$ followed by a repetition encoding through repetition encoder 113. The coded bits $C_{n,m}^{(k)}$ output from the repetition encoder 113 are interleaved by the user-specific interleaver $\Pi_k$ 114, and then mapped to modulation alphabets or complex symbols $s_n^{(k)}$ which are elements of a QAM/PSK signal space constellation S by symbol mapper 116. The resulting symbols $s_n^{(k)}$ may be interleaved by the additional $\Pi'_k$ 120 before the transmission, but this is not further discussed in the following. The signals $x_j^{(k)}$ from the K users are transmitted to a channel.

Fig. 1C shows an exemplary receiver, which is similar for CDMA and IDMA, applying multi-user detection and decoding in an iterative manner. The common receiver structure comprises a multi-user detection circuit having a multi-user detector (MUD) 130 and for each user a user-specific iterative processing circuit 131 comprising a decoder 132, a user-specific deinterleaver $\Pi_k^{-1}$ 134 in a forward signal path 136 from the multi-user detector 130 to the decoder 132, a user-specific interleaver $\Pi_k$ 114 and a backward signal path 138 from the detector 132 to the multi-user detector 130, a first node 140 receiving from the multi-user detector 130 an a posteriori log-likelihood signal and an output signal from the interleaver $\Pi_k$ 114 and a second node 142 receiving an output signal of the deinterleaver $\Pi_k^{-1}$ 134 and an a priori log-likelihood signal from the decoder 132.

In other words, the basic receiver structure is common for both schemes, CDMA and IDMA, and consists of a multi-user detector and K user-independent decoders. The multi-user detector and the decoders exchange soft information and improve the performance iteratively.

For convenience, $c_{n,m}^{(k)}$ denotes the coded bits before the interleaver for both CDMA and IDMA. Note that, if overall spectral efficiency is kept equal for CDMA and IDMA, the interleaver size can be taken larger for IDMA than for CDMA

In the following, a linear equation system is developed which is common for both CDMA and IDMA (see also [3], [4]). By $\tau_k$ and $v_k$, respectively, a user-specific delay and a memory of multipath channel of user k is denoted, the total delay of user k becomes $\tau_k$ and $v_k$ which is normalized by a chip duration. Then, the maximum total delays plus one over all users can be defined as $D_c = \max_k(\tau_k + v_k + 1)$ and $D_s = \lceil (D_c-1)/N_n \rceil +1$ in the number of chips and symbols, respectively, where $\lceil \cdot \rceil$ rounds the argument to the nearest integer towards infinity. Note that the symbol delay is equal to the chip delay for IDMA ($D_s = D_c$) since there is no spreading. By denoting $\mathbf{s}_n = \left[ s_n^{(1)}, ..., s_n^{(K)} \right]^T$ and the effective channel $\mathbf{H}_{n,l} = \left[ \mathbf{h}_{n,l}^{(1)}, ..., \mathbf{h}_{n,l}^{(K)} \right]$ of dimension $N_u \times K$, which is defined later, then the received signal vector may be expressed as $\mathbf{y}_n = \sum_{l=0}^{D_s} \mathbf{H}_{n-l,l} \mathbf{s}_{n-l} + \mathbf{\eta}_n$ where $\eta_n$ is a vector of zero-mean complex Gaussian noise with a variance of $N_0/2$ per real dimension. $(\cdot)^T$ denotes transposition. The effective channel takes into account the channel and the spreading code. And it can be seen time-varying if the spreading code depends on the symbol index n. The effective channel $h_{n,1}^{(k)}$ can be determined from the discrete convolution

$$f_n^{(k)} = a_k \mathbf{u}_i^{(k)} * \mathbf{g}^{(k)} \quad \text{where} \quad \mathbf{g}^{(k)} = \left[ \mathbf{0}_{\tau_k}^T, \mathbf{g}_0^{(k)}, ..., \mathbf{g}_{v_k}^{(k)}, \mathbf{0}_{D_c-\tau_k-v_k-1}^T \right]^T, \quad \mathbf{u}_n^{(k)} = \left[ \mathbf{u}_n^{(k)T}, \mathbf{0}_{N_u(D_s-1)}^T \right]^T \quad \text{and} \quad \mathbf{0}_n$$

denotes a zero vector of dimension n. The amplitude of user k is denoted by $a_k \in \mathbb{R}$ which takes into account near-far scenarios. Then, the effective channel is defined as $\mathbf{h}_{n,l}^{(k)} = \left[ f_{n,lN_u+1}^{(k)}, ..., f_{n,(l+1)N_u}^{(k)} \right]^T \in C^{N_u}$. Now, a sliding window is considered for the detection of a symbol at time n. By defining the symbol vector $\mathbf{s} = \left[ \mathbf{s}_{n-D_s+1}^T, ..., \mathbf{s}_n^T, ..., \mathbf{s}_{n+D_s-1}^T \right]^T$ of dimension $K(2D_s-1)$ and the channel matrix

$$\mathbf{H} = \begin{bmatrix} \mathbf{H}_{n-D_s+1,D_s-1} & \cdots & \mathbf{H}_{n,0} & & \\ & \ddots & \vdots & \ddots & \\ & & \mathbf{H}_{n,D_s-1} & \cdots & \mathbf{H}_{n+D_s-1,0} \end{bmatrix},$$

of dimension $N_u D_s \times K(2D_s-1)$, the received signal vector $\mathbf{y} = \left[ \mathbf{y}_n^T, ..., \mathbf{y}_{n+D_s-1}^T \right]^T$ can be concisely expressed as

$$\mathbf{y} = \mathbf{Hs} + \mathbf{\eta},$$

where $\mathbf{\eta} = \left[ \eta_n^T, ..., \eta_{n+D_s-1}^T \right]^T$.

The multi-user detector (MUD)s of CDMA and IDMA compute the a posteriori log-likelihood ratio (L-values)

$$L^{(m)}\left(c_{n,m}^{(k)}\right) \quad = \quad \log\frac{P\left(c_{n,m}^{(k)} = +1\middle|y\right)}{P\left(c_{n,m}^{(k)} = -1\middle|y\right)}$$

$$= \quad \log\frac{\sum_{s_i \in s_m^+} P\left(y\middle|s_n^{(k)} = s_i\right)P\left(s_n^{(k)} = s_i\right)}{\sum_{s_i \in s_m^-} P\left(y\middle|s_n^{(k)} = s_i\right)P\left(s_n^{(k)} = s_i\right)}$$

where $P\left(c_{n,m}^{(k)} = \pm1\middle|y\right)$ is the conditional probability that the coded bit was transmitted given the received sequence y. We denote by $S_m^+$ the set of all constellation points $S_i$ where its m-th bit is $+1\left(c_{n,m}^{(k)} = +1\right)$; and by $S_m^-$ the set of all constellation points $s_i$, where its m-th bits is $-1\left(c_{n,m}^{(k)} = -1\right)$. The *a priori* probability of the symbol $P\left(s_n^{(k)} = s_i\right)$ is computed from the *a priori* probabilities of the code bits $P\left(c_{n,m}^{(k)} = c_{i,m}\right)$ which are approximately uncorrelated due to the interleaver. Thus, it is computed as

$$P\left(s_n^{(k)} = s_i\right) = \prod_{m=1}^{M} P\left(c_{n,m}^{(k)} = c_{i,m}\right) \qquad (2)$$

where

$$P\left(c_{n,m}^{(k)} = c_{i,m}\right)$$

is computed from the L-value sent from the decoder

$$P\left(c_{n,m}^{(k)} = c_{i,m}\right) = \frac{1}{2}\left(1 + c_{i,m}\,\tanh\left(L_a^{(m)}\left(c_{n,m}^{(k)}\right)/2\right)\right),$$

and $L_a^{(m)}\left(c_{n,m}^{(k)}\right)$ is initialized to 0 before the first iteration. The computation of the conditional probability $P\left(y\middle|s_n^{(k)} = s_i\right)$ depends on particular schemes and will be explained in the next subsections. From the *a posteriori* log-likelihood ratios $L^{(m)}\left(c_{n,m}^{(k)}\right)$, the extrinsic information $L_e^{(m)}\left(c_{n,m}^{(k)}\right)$ is computed by bit-wise subtraction of the *a priori* log-likelihood ratios $L_a^{(m)}\left(c_{n,m}^{(k)}\right)$. The extrinsic L-values are sent to the decoder after deinterleaving by $\Pi_k^{-1}$.

The decoder computes improved *a posteriori* L-values $L^{(d)}\left(c_{n,m}^{(k)}\right)$ about the code bits taking into account the code constraints. The decoding of the repetition code is to sum up every $1/R_r$ log-likelihood ratios, as described y D. Divsalar and F. Pollara in "Hybrid concatenated codes and iterative decoding," California Institute of Technology, Pasadena, California, Tech. Rep. TDA Progress Report 42-130, 1997, in the following [7]. The decoding of the convolutional code can be based on the BCJR (Bahl-Cocke-Jelinek-Raviv) algorithm as described by L. R. Bahl, J. Cocke, F. Jelinek, and J. Raviv in "Optimal decoding of linear codes for minimizing symbol error rate," IEEE Transactions on Information Theory, vol. 20, no. 2, pp. 284-287, March 1974, in the following [8]. In the following its maximum-logarithmic or max-log approximation (Max-Log-MAP) is used which can be found, e.g. in "Optimal and sub-optimal maximum a posteriori algorithms suitable for turbo decoding," by P. Robertson, P. Hoeher, and E. Villebrun, European Transactions on Telecommun. (ETT), vol. 8, no. 2, pp. 119-125, March 1997, in the following [9]. Again, extrinsic information

$L_e^{(d)}\left(c_{n,m}^{(k)}\right)$ is computed and sent to the multi-user detector (MUD). The multi-user detector (MUD) computes and delivers new L-values $L_e^{(m)}\left(c_{n,m}^{(k)}\right)$ based on the received sequence y and the fed back *a priori* L-values $L_a^{(d)}\left(c_{n,m}^{(k)}\right)$

which is the interleaved extrinsic L-values $L_e^{(d)}\left(c_{n,m}^{(k)}\right)$ from the decoder. Performing some iterations can improve the error rate performance.

In the following, the computation of the conditional probability $P\left(y\left|s_n^{(k)} = s_i\right.\right)$ is briefly explained for CDMA and IDMA.
In "Iterative (Turbo) soft interference cancellation and decoding for coded CDMA," by X. Wang and H. V. Poor, IEEE Transactions on Communications, vol. 47, no. 7, pp. 1046-1061, July 1999, in the following [4], an iterative multi-user detection technique for CDMA based on the instantaneous *minimum mean square error* (MMSE) filter has been proposed.
This technique is developed for BPSK modulation. In the following it is extended for a higher order modulation like QAM/PSK constellations. In the context of turbo equalization for a single user case, similar results can be found, e.g. in "Turbo-equalization for multilevel modulation: an efficient low-complexity scheme," by A. Dejonghe and L. Vandendorpe, Proc. IEEE International Conference on Communications (ICC2002), vol. 3, April/May 2002, pp. 1863-1867, in the following [10] and in "Minimum mean squared error equalization using a priori information," by M. Tüchler, A. C. Singer, and R. Koetter, IEEE Transactions on Signal Processing, vol. 50, no. 3, pp. 673-683, March 2002, in the following [11].

There are two steps to compute the conditional probability $P\left(y\left|s_n^{(k)} = s_i\right.\right)$. The first step is the soft

interference cancellation

$$\widetilde{\mathbf{y}}^{(k)} = \mathbf{y} - \mathbf{H}\left(\widetilde{\mathbf{s}} - \widetilde{s}_n^{(k)}\mathbf{e}_\kappa\right) \qquad (3)$$

where

$$\widetilde{\mathbf{s}} = \left[\widetilde{\mathbf{s}}_{n-D_s+1}^T,...,\widetilde{\mathbf{s}}_n^T,...,\widetilde{\mathbf{s}}_{n+D_s-1}^T\right]^T, \widetilde{\mathbf{s}}_n = \left[\widetilde{s}_n^{(1)},...,\widetilde{s}_n^{(K)}\right]^T, \quad \kappa = (D_s-1)K + k$$

and $\mathbf{e}_\kappa$ denotes the $\kappa$-th column of identity matrix of respective dimension. The soft symbol estimates are computed from the *a priori* information:

$$\widetilde{s}_n^{(k)} = E\left[s_n^{(k)}\right] = \sum_{s_i \in S} s_i P\left(s_n^{(k)} = s_i\right)$$

where $P\left(s_n^{(k)} = s_i\right)$ is computed from (2). By defining a covariance operator $Cov(\mathbf{x,y}) = E[\mathbf{xy}^H]-E[\mathbf{x}]E[\mathbf{y}^H]$, the auto-correlation of the symbol $s_n^{(k)}$ is computed as

$$\rho_n^{(n)} = Cov\left(s_n^{(k)}, s_n^{(k)}\right) = E\left[\left|s_n^{(k)}\right|^2\right] - \left|\tilde{s}_n^{(k)}\right|^2 = \sum_{s_i \in S}|s_i|^2 P\left(s_n^{(k)} = s_i\right) - \left|\tilde{s}_n^{(k)}\right|^2 \quad \text{where} \quad (\bullet)^H$$

denotes Hermitian transpose. Assuming uncorrelated symbols, the covariance matrix can be written as

$$C = Cov(\mathbf{s},\mathbf{s}) = diag\left(\left[\rho_{n-D_s+1}^T,...,\rho_n^T,...,\rho_{n+D_s-1}^T\right]\right) \text{ and } \rho_n^T = \left[\rho_n^{(1)},...,\rho_n^{(K)}\right].$$

In the second step, MMSE filtering is applied to the received sequence after the soft interference cancellation:

$$z_{n,s_i}^{(k)} = \mathbf{w}_{n,s_i}^{(k)}{}^H \tilde{\mathbf{y}}^{(k)} \text{ where } z_{n,s_i}^{(k)}$$

is the output of the MMSE filter given the symbol $s_i$ is transmitted. The MMSE weight vector is found as

$$\mathbf{w}_{n,s_i}^{(k)} = \arg\min_w E\left[\left|s_n^{(k)} - \mathbf{w}^H \tilde{\mathbf{y}}^{(k)}\right|^2 \Big| s_n^{(k)} = s_i\right] = \mathbf{R}_{n,s_i}^{-1} r_{n,s_i}^{(k)}$$

where the correlation vector and the correlation matrix can be computed as

$$\mathbf{r}_{n,s_i}^{(k)} = E\left[\tilde{\mathbf{y}}^{(k)} s_n^{(k)*} \Big| s_n^{(k)} = s_i\right] = \mathbf{H}\mathbf{e}_\kappa |s_i|^2$$

and

$$\mathbf{R}_{n,s_i}^{(k)} = E\left[\tilde{\mathbf{y}}^{(k)} \tilde{\mathbf{y}}^{(k)H} \Big| s_n^{(k)} = s_i\right] = \mathbf{H}\left(C - \left(\rho_n^{(k)} - |s_i|^2\right)\mathbf{e}_\kappa \mathbf{e}_\kappa^T\right)\mathbf{H}^H + N_0\mathbf{I}$$

respectively. The output $z_{n,s_i}^{(k)}$ is approximated to be Gaussian distributed noise with the mean

$$\mu_{n,s_i}^{(k)} = E\left[z_n^{(k)} \Big| s_n^{(k)} = s_i\right] = \mathbf{w}_{n,s_i}^{(k)}{}^H \mathbf{H}\mathbf{e}_\kappa s_i$$

and the variance

$$\sigma_{n,s_i}^{(k)2} = E\left[\left|z_n^{(k)} - \mu_{n,s_i}^{(k)}\right|^2 \Big| s_n^{(k)} = s_i\right] = \mathbf{w}_{n,s_i}^{(k)}{}^H \mathbf{r}_{n,s_i}^{(k)} - \left|\mu_{n,s_i}^{(k)}\right|^2.$$

Then, finally the conditional probability is computed as

$$P\left(y\middle|s_n^{(k)} = s_i\right) \approx P\left(z_n^{(k)}\middle|s_n^{(k)} = s_i\right)$$

$$= \frac{1}{\pi \sigma_{n,s_i}^{(k)\,2}} \exp\left(-\frac{\left|z_{n,s_i}^{(k)} - \mu_{n,s_i}^{(k)}\right|^2}{\sigma_{n,s_i}^{(k)\,2}}\right)$$

The multi-user detection technique for IDMA has been presented, e.g in [1]-[3], where the multi-user detector (MUD) is developed only for BPSK symbols. In the following, it is extended for higher order modulation. The first step is the soft interference cancellation as it is also performed for CDMA in (3). Instead of applying the computational intensive MMSE filtering to the signal after the soft interference cancellation, IDMA applies the following approximation to compute the conditional probability

$$P\left(y\middle|s_n^{(k)} = s_i\right):$$

$$P\left(y\middle|s_n^{(k)} = s_i\right) \approx \prod_{l=0}^{v_k} P\left(\tilde{y}_{l+\tau_k+1}^{(k)}\middle|s_n^{(k)} = s_i\right)$$

$$= \alpha \cdot \exp\left(-\sum_{l=0}^{v_k} \frac{\left|\tilde{y}_{l+\tau_k+1}^{(k)} - g_l^{(k)}s_i\right|^2}{\sigma_l^{(k)^2}}\right),$$

where the scalar $\alpha$ is defined as

$$\alpha = \prod_{l=0}^{v_k} 1\middle/\left(\pi \sigma_l^{(k)^2}\right).$$

The approximation is to compute the probability from the independent channel delay components, and the probability of each delay component is approximated to be Gaussian distributed with the mean $g_l^{(k)}$ (channel tap coefficient) and the variance

$$\sigma_l^{(k)^2} = Cov\left(\tilde{y}_{l+\tau_k+1}^{(k)}, \tilde{y}_{l+\tau_k+1}^{(k)}\middle|s_n^{(k)} = s_i\right) = \mathbf{e}_{l+\tau_k+1}^T \mathbf{HCH}^H \mathbf{e}_{l+\tau_k+1} - \rho_n^{(k)}\left|g_l^{(k)}\right|^2 + N_0.$$

The complexity of the multi-user detector for IDMA is relatively low and can be much simpler realized than that of CDMA, as can be seen from the aforementioned explanations. There are no particularly complex operations such as matrix inversions involved. The complexity of the decoder, on the other hand, can be quite high for a large number of users because there are K independent decoders. The decoding task for IDMA is twofold: decoding the repetition code and the convolutional code, where the former is far simpler than the latter. Therefore, the invention exploits the computationally expensive, yet powerful, decoding of the convolutional code only when it makes sense.

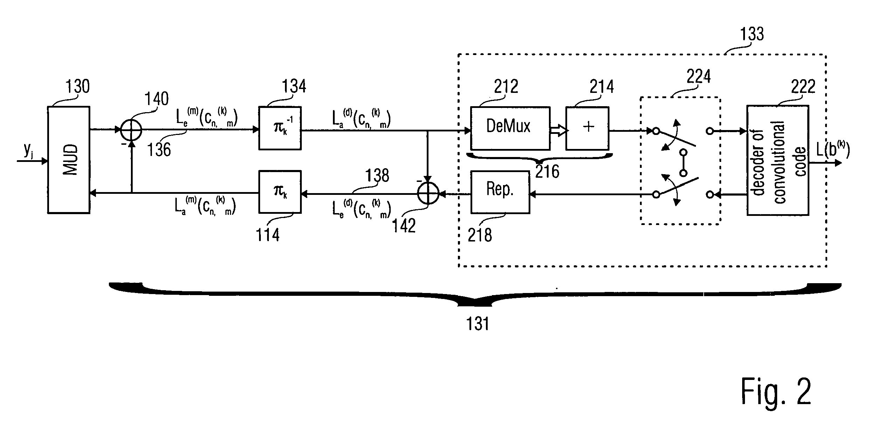

Fig. 2 shows a preferred embodiment of the inventive receiver. Fig. 2 shows the multi-user detector 130 and one user-specific iterative processing circuit 131, for example for user k. The user-specific iterative processing circuit 131 comprises as already shown in Fig. 1C the user-specific deinterleaver $\Pi_k^{-1}$ 134 in the forward signal path 136, the user-specific interleaver $\Pi_k$ 114 in the backward signal path 138, the first node 140 and the second node 142. The decoder 133 comprises in the forward signal path 136 a demultiplexer 212, an adder 214, the demultiplexer 212 and the adder 214 forming a repetition decoder 216, a repetition encoder 218 in the backward signal path 138, a convolutional decoder 222 and a switching means 224, wherein the switching means 224 is operative to directly connect the repetition decoder 216 with the repetition encoder 218 or to connect the convolutional decoder between the repetition decoder 216 and the repetition encoder 218.

As shown in Fig. 2, the decoder can be scheduled whether or not to decode the convolutional code. If the convolutional code is not decoded, there will be still some improvement due to the decoding of the repetition code. For a better understanding for an iteration based only on the decoding and encoding process, i.e. without convolutional decoding, the effects of an exemplary 1/4 repetition decoding and encoding are described briefly. Assuming that [... 12 8 0 -2 ...] is the log-likelihood ratio $L_a^{(d)}\left(C_{n,m}^{(k)}\right)$ , i.e. the output signal of the deinterleaver 134 and the input signal for the demultiplexer 212, demultiplexing by demultiplexer 212 and summation by adder 214, i.e. repetition decoding, leads to an output signal of [... 18 ...] at the repetition decoder 216. Repetition encoding this output signal again by repetition encoder 218 generates an output signal of the same of [... 18 18 18 18 ...]. From this output signal of the repetition encoder 218 the aforementioned $L_a^{(d)}\left(C_{n,m}^{(k)}\right)$ is substracted at the second node 142. The result of the substraction is the extrinsic log likelihood ratio $L_e^{(d)}\left(C_{n,m}^{(k)}\right)$ which is an input to the multi-user detector 130 after being permutated by the user-specific interleaver 114.

In case of CDMA, no performance improvement can be obtained, if we do not decode the convolutional code since the repetition code is not used.

In the following it will be shown that the invention leads to a complexity reduction for IDMA and is beneficial for IDMA in two different scheduling strategies: user-wise scheduling and iteration-wise scheduling.

In the following the user-wise scheduling will be discussed in more detail. Traditionally, the medium access control protocol tries to avoid simultaneous transmissions since the physical layer is seen by the medium access control as a collision model like the current wireless local area network standard, as described in [5]. Instead of avoiding the simultaneous transmissions by the medium access control protocol, it is also possible that the interference is resolved in the physical layer, as motivated in literatures, e.g. in [6]. Multi-user detection techniques may be applied in such an interference limited environment due to the simultaneous transmissions. Keeping this view in mind, one can consider a scenario where multiple transmitters send their signals while a receiver needs to detect only the signal which is transmitted by a particular transmitter. Other signals are considered as interferers.

In decentralised systems, not all network nodes are likely to afford the full complexity of multi-user detection. Therefore, some form of complexity reduction is considered. It is proposed to decode the convolutional code for the limited number of users. Computer simulations are performed to evaluate this proposed scheme. The information bits of frame size $N_b = 128$ are encoded by the rate $R_c = 1/2$ memory 4 standard convolutional code with generator polynomial $[23,35]_8$. The trellis of the convolutional encoder is terminated and requires 4 additional termination bits. For CDMA the code bits are interleaved by the random interleaver, mapped on the BPSK symbols, and then spread by the $N_u = 4$ spreading code. The spreading code is constructed from the orthogonal variable spreading factor (OVSF) codes and a UMTS uplink long scrambling sequence defined in 3G TS 25.213, "3rd generation partnership project; technical specification group radio access network; spreading and modulation (FDD) (release 4)," June 2002, in the following [12]. For IDMA the convolutionally coded bits are further encoded by the rate $R_r = 1/4$ repetition code, interleaved by the random interleaver, then mapped on the BPSK symbols. Therefore, the overall spectral efficiency is kept the same for both schemes.

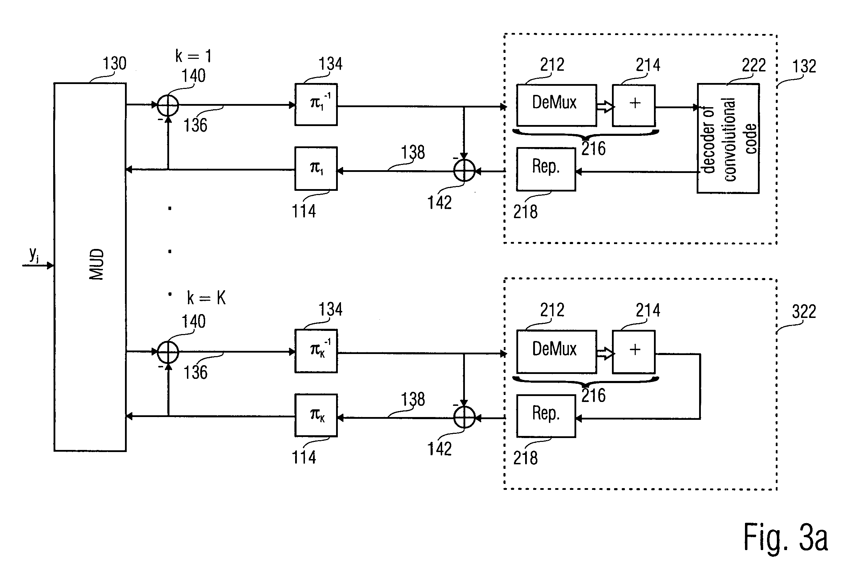

Figure 3A shows another embodiment of an inventive receiver, based on the receiver structure shown in Fig. 1C, depicting the K user-specific iterative processing units, each comprising a decoder. The receiver shown in Fig. 3A comprises a decoder 132 associated with user k = 1 having a demultiplexer 212 connected to an adder 214, connected to a convolutional decoder 222 which is again connected to a repetition encoder 218. The decoder 322 associated with user k = K comprises a demultiplexer 212 connected to an adder 214, both, demultiplexer 212 and adder 214 forming a repetition decoder 216 which is directly connected to a repetition encoder 218. The remaining design of the receiver is equal to the one shown in Fig. 2.

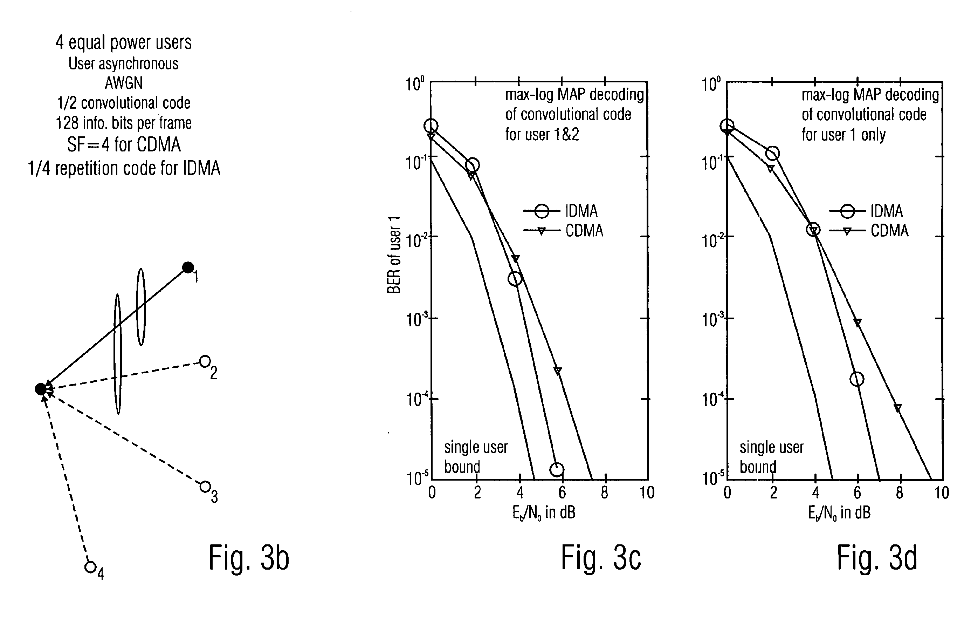

Fig. 3B shows a scenario for four equal power users, wherein the users are transmitting asynchronously on an additive white Gaussian noise channel with 1/2 convolutional code, 128 information bits per frame, SF = 4 for CDMA and 1/4 repetition code for IDMA. The user of interest is user 1 and in the following two simulations will be discussed based of Figs. 3C and 3D, wherein Fig. 3C describes the bit error rate performance when the signals of users three and four have been processed without convolutional decoding, i.e. by decoder 322 as shown in Fig. 3A. Alternatively to the decoder 132 a "switchable" decoder 133 as shown in Fig. 2 with the respective switching configuration can be used. Alternatively to the decoder 322 a "switchable" decoder 133 with the respective switching configuration can be used. The user of interest is user one.

In other words, the decoding of the convolutional code is scheduled for the first and the second users, refer to Fig. 3C, and only for the fist user, refer to Fig. 3D. The bit error rate performance of user one is plotted.

Fig. 3C shows the bit error rate (BER) performance after six iterations of user one over the signal to noise ratio per bit $E_b/N_0$ in dB. For the simulation the maximum-logarithmic maximum a priori (max-log MAP) decoding for the convolutional code has been performed for user one and two. The users are transmitting with $\tau_k = k - 1$ user delays.

In Fig. 3C plot 312 shows the bit error rate performance for CDMA, plot 314 shows the bit error rate performance for IDMA, wherein plot 314 for IDMA shows a better performance than plot 312 for CDMA. For reference purposes plot 316 shows the bit error rate performance for a single user (single user bound).

Fig. 3D shows the results of the other equal power simulation based on the same simulation parameters except that in this other scenario only the signals of user 1 have been convolutional decoded, i.e. processed by the decoder 312 according to Fig. 3A. The signals of users two to four have been only repetition decoded, i.e. only processed with a decoder like the decoder 322 shown in Fig. 3A.

In Fig. 3D plot 322 shows the bit error rate performance for CDMA, plot 324 shows the bit error rate performance for IDMA. The bit error rate performance decreased slightly for IDMA comparing plot 324 to plot 314.

As expected, it can be observed that IDMA performs better than CDMA due to the repetition coding. The performance gap between IDMA and CDMA becomes larger by decreasing the number of users for which the convolutional code is decoded.

Since the power control is a difficult task in decentralised networks, additionally near-far-scenarios have been simulated. For the simulation, all parameters are the same as for the scenario described based on Figs. 3A to 3D except that the signals of two users are 3dB stronger than the other two users.

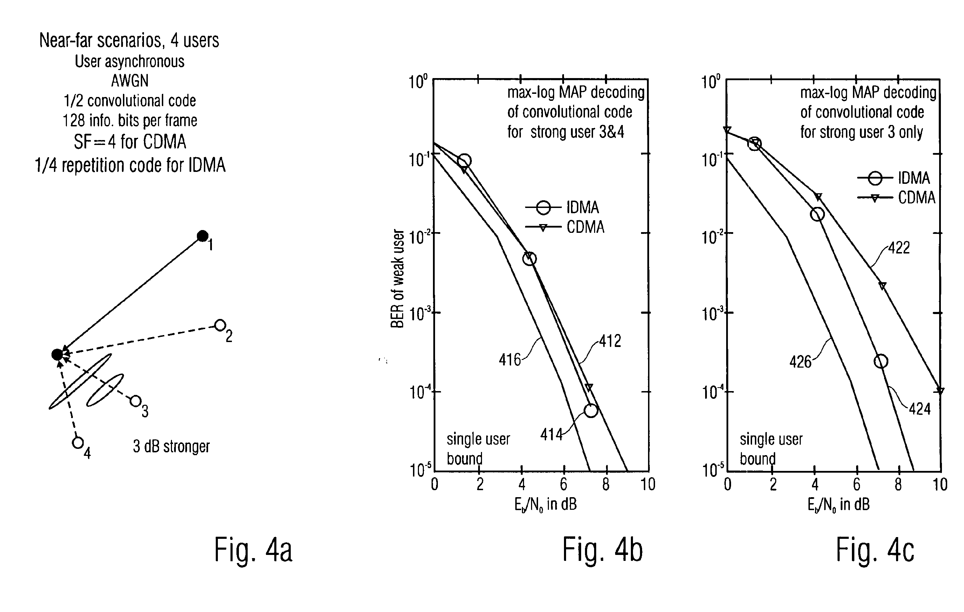

Fig. 4A shows the near-far-scenario for four users, wherein the users transmit asynchronously on an additive white Gaussian noise channel with 1/2 convolutional code, 128 information bits per frame, SF = 4 for CDMA and 1/4 repetition code for IDMA, the four users transmitting with $\tau_k = k - 1$ user delays. As can be seen from Fig. 4A, users three and four transmit signals which are 3dB stronger than the signals of user one and two. User one as a week user is the user of interest which is suffering strongly from the strong users three and four.

Fig. 4B shows the results for a simulation, wherein the maximum-logarithmic maximum a priori decoding of the convolutional code, i.e. the convolutional decoding, for the strong users three and four has been performed, wherein for the week users one and two only the less complex repetition decoding and encoding has been performed. The convolutional decoding has only been performed at the last iteration for user one, only to obtain the bit error rate performance. Plot 412 shows the bit error rate performance for CDMA and plot 414 shows the bit error rate performance for IDMA. For reference purposes, plot 416 shows the bit error rate performance for a single user.

Fig. 4C shows the results of a second simulation with the same parameters as the preceding simulation except that now only for strong user three the maximum-logarithmic maximum a priori decoding of the convolutional code has been performed. Plot 422 shows the bit error rate performance for CDMA and plot 424 shows the bit error rate performance for IDMA. For reference purposes, plot 426 shows the bit error rate performance for a single user.

In Fig. 4B it can be seen that CDMA performs as good as IDMA in contrast to the previous example shown in Fig. 3C. This is due to the fact that the strong users' signals can be reliably detected already without iteration, thus they can be subtracted from the week user with low probability of error. However, IDMA performs much better than CDMA when the complexity is further reduced, refer to Fig. 4C, since IDMA can still improve detection of strong users by the decoding of the repetition code.

It is therefore concluded that the invention and the user-wise scheduling achieves graceful performance degradation by drastically reducing the overall complexity. It has been shown that it is not always necessary to detect all users' signals and that decoding of the convolutional code for signals of the user of interest only and/or for strong interferers provides already some performance improvements at reduced complexity.

A similar tendency has been observed for multi-path channels, but the results are not shown in this document. It can be additionally noted that, if the convolutional code is always decoded, the performance of IDMA and CDMA is very similar and approaches the single user bound performance as reported in [3].

In the following, the iteration-wise scheduling will be explained in more detail. IDMA is an iterative multi-user detection technique. It is well known that the interleaver size is important for iterative processing schemes. It must be sufficiently large for the iterative exchange of the extrinsic information to be effective over many iterations. Otherwise the extrinsic information will be correlated over iterations and an expected theoretical performance gain assuming an infinitely large interleaver size cannot be approached. However, the interleaver size is always limited by the packet size in a practical system.

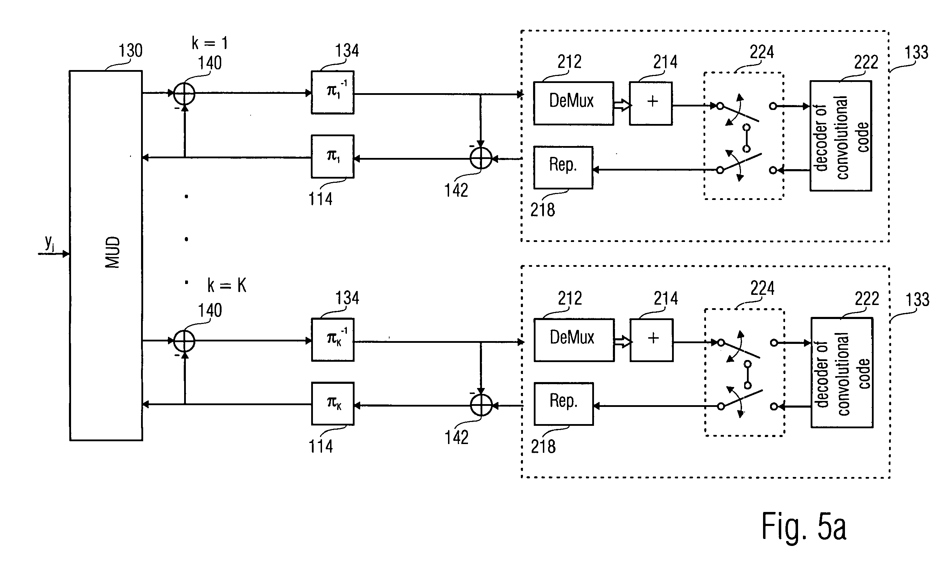

Fig. 5A shows another preferred embodiment of an inventive receiver comprising in each of the K user-specific iterative processing circuits a decoder 133 with a means for switching 224.

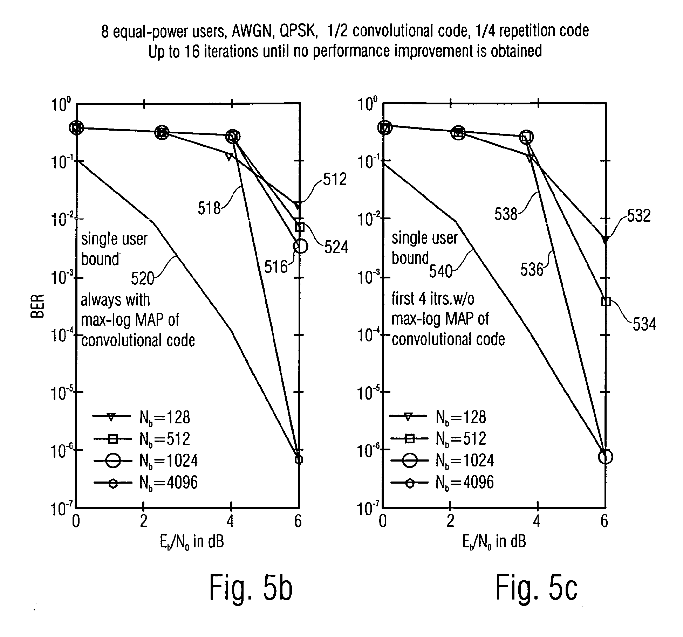

The Figs. 5B and 5C show a bit error rate performance for eight equal power-users on an additive white Gaussian noise channel for different sizes of interleavers. The information bits of frame or block length $N_b = 128$, 512, 1024 and 4096 information bits are processed by quadrature phase shift key (QPSK) modulation, rate $R_c = 1/2$ convolutional coding, by rate $R_r = 1/4$ repetition coding, i.e. the results are basically based on the same parameters as in Figs. 3C and 3D, with up to 16 iterations until no performance improvement is obtained. The K = 8 users are perfectly

synchronous ($\tau_k = 0$, $\forall$k). The interleavers for all users are randomly generated.

Fig. 5B shows the bit error rate performance when the maximum-logarithmic maximum a priori decoding of the convolutional code is always, i.e. at every iteration starting from the first iteration, performed. Plot 512 shows the bit error rate performance for frame length $N_b$ = 128, plot 514 shows the bit error rate performance for frame length $N_b$ = 512, plot 516 shows the bit error rate performance for frame length $N_b$ = 1024 and plot 518 shows the bit error rate performance for frame length $N_b$ = 4096 bits. For comparison plot 520 shows the bit error rate performance for a single user (single user bound).

Fig. 5C shows the results of another simulation based on the same parameters as for Fig. 5B except that for all users the first four iterations have been performed only with the repetition decoding and repetition encoding, i.e. without maximum-logarithmic maximum a priori decoding of the convolutional code. Plot 534 shows the bit error rate performance for a frame length of $N_b$ = 128, plot 534 shows the bit error rate performance for frame length $N_b$ = 512 information bits, plot 536 shows the bit error rate performance for frame length $N_b$ = 1024 information bits and plot 538 shows the bit error rate performance for $N_b$ = 4096 bits. For reference purposes plot 540 shows the bit error rate performance for single user bound.

To summarize the results of Figs. 5B and 5C, in Fig. 5B, the performance is plotted when the convolutional code is always decoded in addition to the repetition code. It can be seen that the performance improves for the larger frame size and the performance converges to the single user bound at $E_b/N_0$ = 6 dB for $N_b$ = 4096. In Fig. 5C, the performance is plotted when only the repetition code is decoded for all users in the first four iterations. The convolutional code is also decoded after the four iterations. The performance also improves for the larger frame size, but it achieves better bit error performance than the previous case. Additionally, the performance already converges to a single user bound at $E_b/N_0$ = 6 dB for $N_b$ = 1024.

To understand the phenomenon better, the system was analysed using the extrinsic information transfer (EXIT) chart, as described in "Convergence behavior of iteratively decoded parallel concatenated codes," by S. ten Brink, IEEE Transactions on Communications, vol. 49, no. 10, pp. 1727-1737, October 2001, in the following [13].

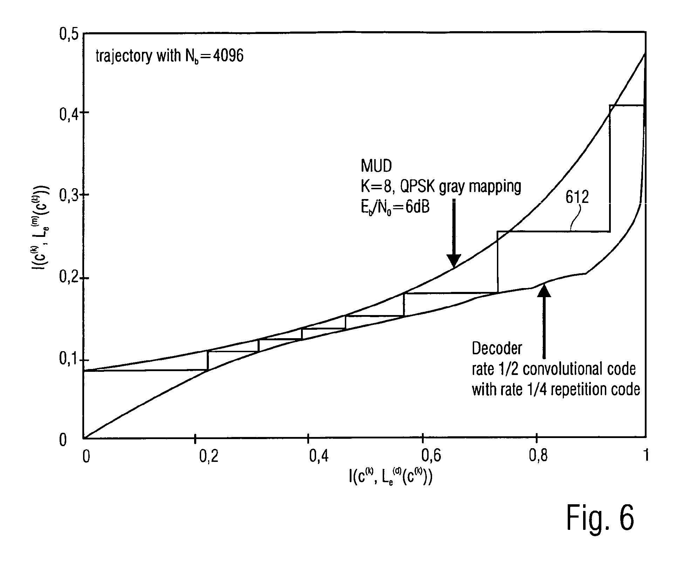

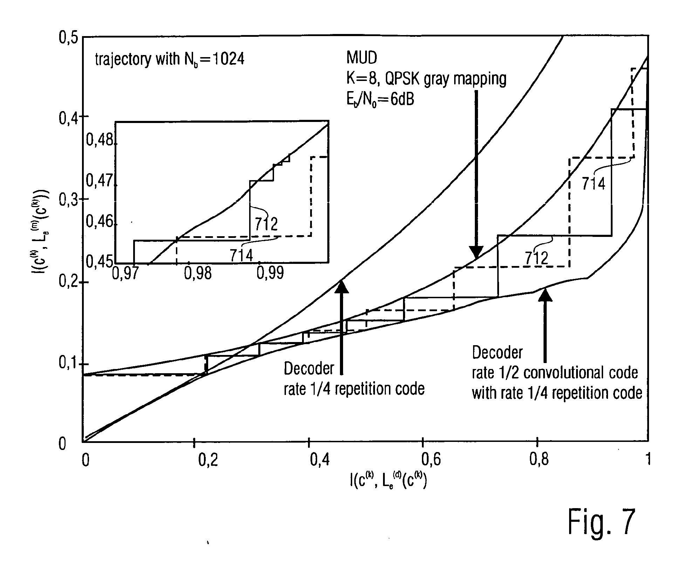

The EXIT chart shows the average mutual information between the transmitted code bits and the input L-values, which are obtained from the other SISO block, versus the average mutual information between the transmitted code bits and the extrinsic output L-values, which are sent to the other soft-in soft-out (SISO) block. In the Figs. 6 and 7 the horizontal axis is the mutual information $I\left(c, L_e^{(d)}(c)\right)$ at the input of the multi-user detector (MUD), which is the extrinsic information sent from the decoder. The vertical axis is the mutual information $I\left(c, L_e^{(m)}(c)\right)$ at the output of the multi-user detector (MUD), which is sent to the decoder as the input. Curves for the relation between input and output mutual information are plotted for both the multi-user detector (MUD) and the decoder. The trajectory between the two curves starting from the multi-user detector (MUD) without *a priori* information illustrates the performance improvements by iterations. The average mutual information between code bits c and L-values L(c) can be computed by numerical evaluation of as described in [13]:

$$
\begin{aligned}
I\left(c, L(c)\right) \;=\; & \sum_{c=+1,-1} \int_{-\infty}^{+\infty} P\left(L(c)|c\right) P(c) \\
& \times \log_2 \frac{2P\left(L(c)|c\right)}{P\left(L(c)|c = +1\right) + P\left(L(c)|c = -1\right)} \, dL(c)
\end{aligned}
$$

For the EXIT chart computation, it is assumed that the input L-values

$$
L_e^{(m)}\left(c_{n,m}^{(k)}\right) \;\; \text{and} \;\; L_e^{(d)}\left(c_{n,m}^{(k)}\right)
$$

are statistically independent and Gaussian distributed.

Fig. 6 shows the EXIT charts for $N_b$ = 4096 where the convolutional code is always decoded. For this example of the relatively large frame size, the trajectory 612 closely traces an ideal track and the performance successfully converges to the single user bit error rate performance as shown in Fig. 5B.

Fig. 7 shows the EXIT charts for $N_b$ = 1024. The EXIT curve for the rate 1/4 repetition code without convolutional code is also added. Trajectories are plotted for two different cases: (1) convolutional code is always decoded as well as the repetition code (solid line 712), and (2) only the repetition code is decoded in initial 4 iterations, then the convolutional code is also decoded in the rest of the iterations (dashed line 714). It can be observed that in the former case the trajectory goes out of the ideal track after some iterations and it finally fades out before reaching the error free point, i.e.

$$I\!\left(c, L_e^{(d)}(c)\right) \;=\; 1.$$ In the latter case, the trajectory stacks at the crossing point of the EXIT curve of the rate 1/4 repetition code and that of the multi-user detector (MUD). Then, it further goes through the tunnel by decoding the repetition code and the convolutional code. The trajectory does not exactly trace the ideal track, but better than the former case and it finally reaches the error free point. The respective bit error rate (BER) performance is shown in Fig. 5C. It should be also pointed out that, for lower points in the EXIT charts, the gain is similar whether or not to decode the convolutional code, see Fig. 7. Therefore, from this point of view it also makes sense to decode only the repetition code (also reducing complexity) in initial few iterations because the gain mainly comes from the repetition code, anyway. It was observed that decoding only the repetition code in initial few iterations can end up with the improved performance for the small frame size. A possible way to decide when to start the decoding of the convolutional code is to compare the bit pattern by hard decision in a current iteration to one obtained in the previous iteration. When there is no change anymore, then the decoding of the convolutional code may be started. However, it was also observed by means of computer simulations that this decision does not strictly influence the performance as long as the initial iterations without decoding of the convolutional code is sufficiently large.

Summarising it can be said that the inventive receiver and the inventive method for receiving provide a complexity re duction for IDMA. As explained, IDMA has a close relation to code division multiple access, but instead of user-distinct or user-specific spreading codes, a bandwith expansion is fully exploited for coding resulting in a very low rate code, and users are separated only by user-specific interleavers. At a receiver, a multi-user detector and a bank of user-independent decoders cooperatively mitigate multiple access interference. The very low rate code is typically realised by a convolutional code followed by a less complex repetition code to achieve a variety of rates, thus to flexibly support various numbers of users. Therefore, the decoding task is twofold: decoding the repetition code and the convolutional code where the former is far less computational expensive than the latter. Considering that the decoding task consists of the decoding of the repetition code and the convolutional code, the invention describes a method to decode the conputational intensive, yet powerful, convolutional code only when it makes sense, otherwise only the repetition code is decoded. Two specific scheduling approaches have been described. One approach is to schedule the decoding of convolutional code for a limited number of users only. This reduces the overall complexity of the receiver in order to detect only the wanted signals while the performance is degraded only gracefully. A second approach is to schedule the decoding of the convolutional code for all users only after initial few iterations. That makes sense since the decoding gain mainly comes from the repetition code during the initial iterations. Furthermore, the performance can even improve for a highly user-loaded system requiring many iterations with a short block length. It was shown that the inventive method and the described strategy turns out to be beneficial in terms of complexity reduction with only a graceful performance degradation. In certain scenarios even a performance improvement is possible. That is of great benefit for commercial products.

Depending on certain implementation requirements of the inventive methods, the inventive methods can be implemented in hardware or in software. The implementation can be performed using a digital storage medium, in particular a disk, DVD or a CD having electronically readable control signals stored thereon, which cooperate with a programmable computer system such that the inventive methods are performed. Generally, the present invention is, therefore, a computer program product with a program code stored on a machine-readable carrier, the program code being operative for performing the inventive methods when the computer program product runs on a computer. In other words, the inventive methods are, therefore, a computer program having a program code for performing at least one of the inventive methods when the computer program runs on a computer.

## Claims

1. Receiver for iteratively processing information interleaved in a user-specific manner, said receiver comprising an iterative multi-user detection circuit having a multi-user detector (130) and a plurality of user-specific iterative processing circuits (131), wherein each user-specific iterative processing circuit (131) is associated with a specific user and comprises a decoder (133, 322), a user-specific deinterleaver (134) in a forward signal path (136) from the multi-user detector (130) to the decoder (133, 322), a user-specific interleaver (114) in a backward signal path (138) from the decoder (133, 322) to the multi-user detector (130), a first node (140) receiving an a posteriori log-likelihood signal of the multi-user detector (130) and an output signal of the interleaver (114) and a second node (142) receiving an output signal of the deinterleaver (134) and an a priori log-likelihood signal from the decoder (133, 322); wherein at least one of the decoders (133, 322) comprises:

a repetition decoder (216) in the forward signal path (136) directly connected to a repetition encoder (218) in the backward signal path (138).

2. Receiver according to claim 1, wherein the at least one of the decoders (133) comprises:

a switching means (224) for selectively connecting a convolutional decoder (222) between the repetition decoder (216) and the repetition encoder (218).

3. Receiver according to claim 2, wherein the switching means (224) of the decoder (133) of the user-specific iterative processing circuit (131) of a user of interest connects the convolutional decoder (222) between the repetition decoder (216) and the repetition encoder (218).

4. Receiver according to claim 3, wherein the switching means (224) of the decoder (133) of the user-specific iterative processing circuit (131) of the remaining users connects the respective repetition decoders (216) directly to the respective repetition encoders (218).

5. Receiver according to claim 2, wherein the switching means (224) are arranged for connecting the respective repetition decoders (216) directly to the respective repetition encoders (218) of all user-specific iteration processing circuits (131) during initial iteration processing steps and for connecting the convolutional decoder (222) between the repetition decoder (216) and the repetition encoder (218) of at least one user-specific iterative processing circuit (131) during at least a final iteration processing step.

6. Method for iteratively processing information interleaved in a user-specific manner, said method comprising a multi-user detection and, for each user, a user-specific iterative processing performing for each user a user-specific deinterleaving in a forward signal processing, a decoding and a user-specific interleaving in a backward signal processing; wherein said decoding comprises a repetition encoding subsequent to a repetition decoding.

7. Method according to claim 6, wherein the step of decoding for the said at least one user comprises additionally a step of convolutional decoding in at least one iteration step.

8. Computer program having program code for performing a method in accordance with claims 6 and 7, when the program runs on a computer.

**Amended claims in accordance with Rule 86(2) EPC.**

1. Receiver for iteratively processing convolutionally encoded information interleaved in a user-specific manner, said receiver comprising an iterative multi-user detection circuit having a multi-user detector (130) and a plurality of user-specific iterative processing circuits (131), wherein each user-specific iterative processing circuit (131) is associated with a specific user and comprises a decoder (133, 322), a user-specific deinterleaver (134) in a forward signal path (136) from the multi-user detector (130) to the decoder (133, 322), a user-specific interleaver (114) in a backward signal path (138) from the decoder (133, 322) to the multi-user detector (130), a first node (140) receiving an a posteriori log-likelihood signal of the multi-user detector (130) and an output signal of the interleaver (114) and a second node (142) receiving an output signal of the deinterleaver (134) and an a priori log-likelihood signal from the decoder (133, 322);
wherein at least one of the decoders (322) comprises a repetition decoder (216) in the forward signal path (136) directly connected to a repetition encoder (218) in the backward signal path (138); and
wherein at least one other of the decoders (132) comprises a convolutional decoder (222) connected between a repetition decoder (216) in the forward signal path (136) and a repetition encoder (218) in the backward signal path (138).

2. Receiver for iteratively processing convolutionally encoded information interleaved in a user-specific manner, said receiver comprising an iterative multi-user detection circuit having a multi-user detector (130) and a plurality of user-specific iterative processing circuits (131), wherein each user-specific iterative processing circuit (131) is associated with a specific user and comprises a decoder (133, 322), a user-specific deinterleaver (134) in a forward signal path (136) from the multi-user detector (130) to the decoder (133, 322), a user-specific interleaver (114) in a backward signal path (138) from the decoder (133, 322) to the multi-user detector (130), a first node (140) receiving an a posteriori log-likelihood signal of the multi-user detector (130) and an output signal of the interleaver (114) and a second node (142) receiving an output signal of the deinterleaver (134) and an a priori log-likelihood signal from the decoder (133) comprises:

> a switching means (224) for selectively connecting a repetition decoder (216) in the forward signal path (136) directly to a repetition encoder (218) in the backward signal path (138) or a convolutional decoder (222) between the repetition decoder (216) and the repetition encoder (218).

**3.** Receiver according to claim 2, wherein the switching means (222) of the decoder (133) of the user-specific iterative processing circuit (131) of a user of interest connects the convolutional decoder (222) between the repetition decoder (216) and the repetition encoder (218).

**4.** Receiver according to claim 3, wherein the switching means (224) of the decoder (133) of the user-specific iterative processing circuit (131) of the remaining users connects the respective repetition decoders (216) directly to the respective repetition encoders (218).

**5.** Receiver according to claim 2, wherein the switching means (224) are arranged for connecting the respective repetition decoders (216) directly to the respective repetition encoders (218) of all user-specific iteration processing circuits (131) during initial iteration processing steps and for connecting the convolutional decoder (222) between the repetition decoder (216) and the repetition encoder (218) of at least one user-specific iterative processing circuit (131) during at least a final iteration processing step.

**6.** Method for iteratively processing convolutionally encoded information interleaved in a user-specific manner, said method comprising a multi-user detection and, for each user, a user-specific iterative processing performing for each user a user-specific deinterleaving in a forward signal processing, a decoding and a user-specific interleaving in a backward signal processing;
wherein said decoding comprises for at least one user in an iteration step a repetition encoding subsequent to a repetition decoding and in a consecutive iteration step a repetition encoding subsequent to a convolutional decoding, which is subsequent to a repetition decoding.

**7.** Method for iteratively processing convolutionally encoded information interleaved in a user-specific manner, said method comprising a multi-user detection and, for each user, a user-specific iterative processing performing for each user a user-specific deinterleaving in a forward signal processing, a decoding and a user-specific interleaving in a backward signal processing;
wherein said decoding comprises for at least one user a repetition encoding subsequent to a repetition decoding and wherein said decoding comprises for at least one other user a convolutional decoding between a repetition decoding and repetition encoding.

**8.** Computer program having program code for performing a method in accordance with claims 6 and 7, when the program runs on a computer.

Fig. 1a

Fig. 1b

Fig. 1c

Fig. 2

Fig. 3a

4 equal power users
User asynchronous
AWGN
1/2 convolutional code
128 info. bits per frame
SF=4 for CDMA
1/4 repetition code for IDMA

Fig. 3b

Fig. 3c

Fig. 3d

Near-far scenarios, 4 users
User asynchronous
AWGN
1/2 convolutional code
128 info. bits per frame
SF=4 for CDMA
1/4 repetition code for IDMA

3 dB stronger

Fig. 4a

max-log MAP decoding
of convolutional code
for strong user 3&4

IDMA
CDMA

single user bound

$E_b/N_0$ in dB

Fig. 4b

max-log MAP decoding
of convolutional code
for strong user 3 only

IDMA
CDMA

single user bound

$E_b/N_0$ in dB

Fig. 4c

EP 1 775 869 A1

Fig. 5a

8 equal-power users, AWGN, QPSK, 1/2 convolutional code, 1/4 repetition code
Up to 16 iterations until no performance improvement is obtained

Fig. 5b

Fig. 5c

Fig. 6

Fig. 7

**European Patent Office**

## EUROPEAN SEARCH REPORT

Application Number

EP 05 02 2599

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI PING ET AL: "On interleave-division multiple-access" COMMUNICATIONS, 2004 IEEE INTERNATIONAL CONFERENCE ON PARIS, FRANCE 20-24 JUNE 2004, PISCATAWAY, NJ, USA,IEEE, 20 June 2004 (2004-06-20), pages 2869-2873, XP010712289 ISBN: 0-7803-8533-0 * the whole document * | 1-4,6-8 | H04L1/00 H04B1/00 |
| X | LI PING ET AL: "Analysis and design of IDMA systems based on SNR evolution and power allocation" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26 September 2004 (2004-09-26), pages 1068-1072, XP010786786 ISBN: 0-7803-8521-7 * the whole document * | 1-4,6-8 | |
| A | TARABLE A ET AL: "A linear front end for iterative soft interference cancellation and decoding in coded CDMA" ICC 2001. 2001 IEEE INTERNATIONAL CONFERENCE ON COMMUNICATIONS. CONFERENCE RECORD. HELSINKY, FINLAND, JUNE 11 - 14, 2001, IEEE INTERNATIONAL CONFERENCE ON COMMUNICATIONS, NEW YORK, NY : IEEE, US, vol. VOL. 1 OF 10, 11 June 2001 (2001-06-11), pages 1-5, XP010552954 ISBN: 0-7803-7097-1 * figure 3 * | 5 | TECHNICAL FIELDS SEARCHED (IPC) H04L H04B |

-/--

The present search report has been drawn up for all claims

| Place of search | Date of completion of the search | Examiner |
|---|---|---|
| The Hague | 24 February 2006 | Borges, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 05 02 2599

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WU K Y ET AL: "Multi-layer turbo space-time codes for high-rate applications" GLOBAL TELECOMMUNICATIONS CONFERENCE, 2004. GLOBECOM '04. IEEE DALLAS, TX, USA 29 NOV.-3 DEC., 2004, PISCATAWAY, NJ, USA,IEEE, vol. 6, 29 November 2004 (2004-11-29), pages 3758-3762, XP010758439 ISBN: 0-7803-8794-5 * the whole document *<br>----- | 1-8 | |
| | | | TECHNICAL FIELDS SEARCHED (IPC) |

The present search report has been drawn up for all claims

| Place of search | Date of completion of the search | Examiner |
|---|---|---|
| The Hague | 24 February 2006 | Borges, P |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **L. PING ; L. LIU ; K. Y. WU ; W. K. LEUNG.** Interleave-division multiple-access. *IEEE Transaction on Wireless Communications*
- **H. SCHOENEICH ; P. A. HOEHER.** Adaptive interleave-division multiple access - a potential air interface for 4G bearer services and wireless LANs. *Proc. 1st IEEE and IFIP Int. Conf. on Wireless and Optical Communications and Networks (WOCN '2004),* June 2004, 179-182
- **K. KUSUME ; G. BAUCH.** CDMA and IDMA: Iterative multiuser detections for near-far asynchronous communications. *Proc. IEEE Int. Symposium on Personal, Indoor and Mobile Radio Communications (PIMRC 2005),* September 2005
- **X. WANG ; H. V. POOR.** Iterative (Turbo) soft interference cancellation and decoding for coded CDMA. *IEEE Transactions on Communications,* July 1999, vol. 47 (7), 1046-1061
- Part 11: Wireless LAN medium access control (MAC) and physical layer (PHY) specifications. *IEEE Std 802.11-1997,* June 1997
- **L. TONG ; V. NAWARE ; P. VENKITASUBRAMA-NIAM.** Signal processing in random access. *IEEE Signal Processing Magazine,* September 2004, vol. 21 (5), 29-39
- Hybrid concatenated codes and iterative decoding. *Tech. Rep. TDA Progress Report,* 1997, 42-130
- **L. R. BAHL ; J. COCKE ; F. JELINEK ; J. RAVIV.** Optimal decoding of linear codes for minimizing symbol error rate. *IEEE Transactions on Information Theory,* March 1974, vol. 20 (2), 284-287
- **P. ROBERTSON ; P. HOEHER ; E. VILLEBRUN.** Optimal and sub-optimal maximum a posteriori algorithms suitable for turbo decoding. *European Transactions on Telecommun. (ETT),* March 1997, vol. 8 (2), 119-125
- **A. DEJONGHE ; L. VANDENDORPE.** Turbo-equalization for multilevel modulation: an efficient low-complexity scheme. *Proc. IEEE International Conference on Communications (ICC2002),* April 2002, vol. 3, 1863-1867
- **M. TÜCHLER ; A. C. SINGER ; R. KOETTER.** Minimum mean squared error equalization using a priori information. *IEEE Transactions on Signal Processing,* March 2002, vol. 50 (3), 673-683
- **S. TEN BRINK.** Convergence behavior of iteratively decoded parallel concatenated codes. *IEEE Transactions on Communications,* October 2001, vol. 49 (10), 1727-1737